(19) Europäisches Patentamt
European Patent Office
Office européen des brevets

(11) EP 2 623 554 B1

(12) **EUROPEAN PATENT SPECIFICATION**

(45) Date of publication and mention of the grant of the patent:
**31.08.2016 Bulletin 2016/35**

(21) Application number: **11829409.9**

(22) Date of filing: **03.10.2011**

(51) Int Cl.:
***C08L 7/00*** *(2006.01)* ***B60C 1/00*** *(2006.01)*
***C08J 3/20*** *(2006.01)* ***C08K 3/00*** *(2006.01)*
***C08K 3/04*** *(2006.01)* ***C08K 3/36*** *(2006.01)*
***C08K 5/09*** *(2006.01)* ***C08K 5/18*** *(2006.01)*
***C08K 5/548*** *(2006.01)* ***C08L 9/00*** *(2006.01)*

(86) International application number:
**PCT/JP2011/072793**

(87) International publication number:
**WO 2012/043857 (05.04.2012 Gazette 2012/14)**

(54) **METHOD FOR MANUFACTURING RUBBER COMPOSITION**

VERFAHREN ZUR HERSTELLUNG EINER KAUTSCHUKZUSAMMENSETZUNG

PROCÉDÉ DE FABRICATION D'UNE COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2010 JP 2010224364**

(43) Date of publication of application:
**07.08.2013 Bulletin 2013/32**

(73) Proprietor: **Bridgestone Corporation**
**Tokyo 104-8340 (JP)**

(72) Inventors:
- **KATOU, Seiichi**
**Kodaira-shi**
**Tokyo 187-8531 (JP)**
- **HORIE, Satoshi**
**Kodaira-shi**
**Tokyo 187-8531 (JP)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**EP-A1- 0 849 321**
**WO-A1-96/30419**
**WO-A1-2008/102513**
**WO-A1-2008/123306**
**JP-A- 7 165 991**
**JP-A- 11 263 882**
**JP-A- 2002 348 412**
**JP-A- 2009 126 907**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 623 554 B1

## Description

Technical Field

The present invention relates to a method for producing a rubber composition containing an inorganic filler and having an improved low-heat-generation property.

Background Art

Recently, in association with the movement of global regulation of carbon dioxide emission associated with the increase in attraction to environmental concerns, the demand for low fuel consumption by automobiles is increasing. To satisfy the requirement, it is desired to reduce rolling resistance relating to tire performance. Heretofore, as a means for reducing the rolling resistance of tires, a method of optimizing tire structures has been investigated; however, at present, a technique of using a low-heat-generating rubber composition for tires has become employed as the most common method.

For obtaining such a low-heat-generating rubber composition, there is known a method of using an inorganic filler such as silica or the like.

However, in incorporating an inorganic filler such as silica or the like in a rubber composition to prepare an inorganic filler-containing rubber composition, the inorganic filler, especially silica aggregates in the rubber composition (owing to the hydroxyl group in the surface of silica), and therefore, for preventing the aggregation, a silane coupling agent is used.

Accordingly, for successfully solving the above-mentioned problem by incorporation of a silane coupling agent, various trials have been made for increasing the activity of the coupling function of the silane coupling agent.

For example, Patent Reference 1 proposes a vulcanizable rubber composition containing a rubber polymer, a vulcanizing agent, a filler containing silica, and silane coupling agent, wherein the coupling agent is at least bifunctional and is capable of reacting with silica and the rubber polymer.

Patent Reference 2 proposes a rubber composition that comprises, in 100 parts by weight of a natural rubber and/or a dienic rubber, from 15 to 85 parts by weight of silica, a dispersion improver in an amount of from 1 to 15% by weight of the silica, and a specific silane coupling agent in an amount of from 1 to 15% by weight of the silica.

Patent Reference 3 proposes a rubber composition comprising, in 100 parts by weight of a dienic rubber component (A), from 5 to 150 parts by weight of silica (B) having a nitrogen adsorption specific surface area of from 50 to 300 $m^2/g$, a silane coupling agent (C) having a specific structure and having a mercapto group content of from 1 to 15%, in an amount of from 3 to 15 parts by weight relative to 100 parts by weight of the silica, and from 5 to 20 parts by weight of zinc oxide (D).

Further, Patent Reference 4 proposes a silica-incorporated rubber composition that contains an organic silicon compound having, in the molecule thereof, at least one silicon-oxygen bond and from 1 to 10 sulfur atoms containing at least one linear alkoxy group, and having at least one nitrogen atom in the position spaced from the silicon atom by from 3 to 8 atoms, especially an organic silicon compound having a cyclic structure that contains a nitrogen atom and a silicon atom.

However, in these inventions, nothing is taken into consideration relating to kneading conditions.

As a case of increasing the activity of the coupling function of a silane coupling agent in consideration of kneading conditions, there is mentioned Patent Reference 5; however, it is desired to further improve the effect of enhancing the activity of the coupling function of a silane coupling agent.

Citation List

Patent References

Patent Reference **1:** JP-A 7-165991
Patent Reference 2: WO1997/35918
Patent Reference 3: JP-A 2009-126907
Patent Reference 4: WO2009/104766
Patent Reference 5: WO2008/123306

Summary of the Invention

Problems that the Invention is to Solve

Given the situation as above, an object of the present invention is to provide a method for producing a rubber composition capable of further increasing the activity of the coupling function of a silane coupling agent to thereby successfully produce a low-heat-generating rubber composition, without lowering the workability of the unvulcanized rubber composition. Means for Solving the Problems

For solving the above-mentioned problems, the present inventors have made various investigations of a method of kneading a rubber component, all or a part of an inorganic filler, all or a part of a silane coupling agent, and an acidic and/or basic compound in the first stage of a kneading step therein, and, as a result, have experimentally found that, in order to enhance the activity of the coupling function, it is good to optimize the time at which the acidic and/or basic compound is added, and have completed the present invention.

Specifically, the present invention provides the following:

[1] A method for producing a rubber composition containing a rubber component (A) of at least one selected from natural rubbers and synthetic dienic rubbers, a filler containing an inorganic filler (B), and a silane coupling agent (C) of a compound having a mercapto group, wherein the rubber composition is kneaded in multiple stages, in the first stage of kneading, the rubber component (A), all or a part of the inorganic filler (B), and all or a part of the silane coupling agent (C) are kneaded, then in the first stage or in the subsequent kneading stage, a basic compound (E) is added, an acidic compound (D) is added in the kneading stage after the first stage of kneading, and the highest temperature of the rubber composition in the final stage of kneading is from 60 to 120°C; and

[2] The method for producing a rubber composition according to [1], wherein the mercapto group-having compound is at least one compound selected from a group consisting of compounds represented by the following general formulae (I) and (II):

[Chemical Formula 1]

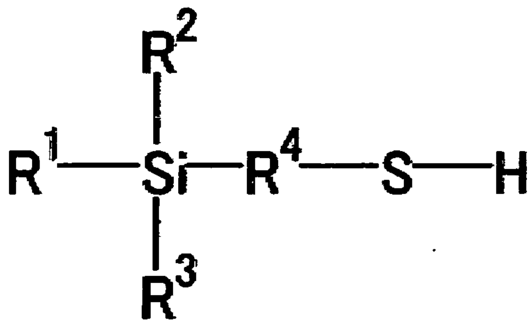

··· (I)

[In the formula, $R^1$ , $R^2$ and $R^3$ each independently represents a group selected from $-O-C_jH_{2j+1}$, $-(O-C_kH_{2k}-)$ a $-O-C_mH_{2m+1}$ and $-C_nH_{2n+1}$; j , m and n each independently indicates from 0 to 12; k and a each independently indicates from 1 to 12; $R^4$ represents a group selected from linear, branched or cyclic, saturated or unsaturated alkylene group, cycloalkenylene group, cycloalkylalkylene group, cycloalkenylalkylene group, alkenylene group, cycloalkenylene group, cycloalkylalkenylene group, cycloalkenylalkenylene group, arylene group and aralkylene group, having from 1 to 12 carbon atoms.]

[Chemical Formula 2]

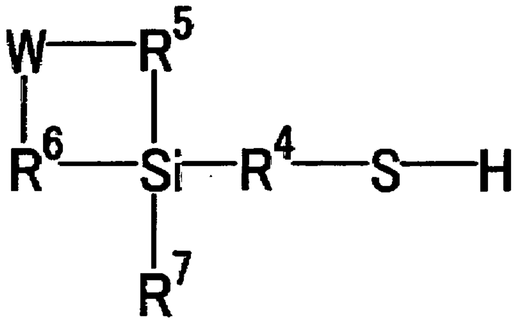

···(II)

[In the formula, W represents a group selected from $-NR^8-$, -O- and $-CR^9R^{10}-$ (where $R^8$ and $R^9$ each represent $-C_pH_{2p+1}$, $R^{10}$ represents $-C_qH_{2q+1}$, p and q each independently indicates from 0 to 20); $R^5$ and $R^6$ each independently represents $-M-C_rH_{2r}-$ (where M represents -O- or $-CH_2-$, and r indicates from 1 to 20); $R^7$ represents a group selected from $-O-C_jH_{2j+1}$,- $(O-C_kH_{2k}-)$ a $-O-C_mH_{2m+1}$ and $-C_nH_{2n+1}$ ; j , m and n each independently indicates from 0 to 12; k and a each independently indicates from 1 to 12; $R^4$ represents a group selected from linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group and aralkylene group, having from 1 to 12 carbon atoms.]

[3] A rubber composition produced according to the rubber composition production method of the above [1]; and

[4] A tire using the rubber composition of the above [3] .

Advantage of the Invention

According to the present invention, there is provided a method for producing a rubber composition capable of further increasing the activity of the coupling function of a silane coupling agent to produce a rubber composition excellent in low-heat-generation property, without lowering the workability of the unvulcanized rubber composition.

Mode for Carrying out the Invention

The present invention is described in detail hereinunder.

The method for producing a rubber composition of the present invention is a method for producing a rubber composition containing a rubber component (A) of at least one selected from natural rubbers and synthetic dienic rubbers, a filler containing an inorganic filler (B), and a silane coupling agent (C) of a compound having a mercapto group, wherein the rubber composition is kneaded in multiple stages, in the first stage of kneading, the rubber component (A), all or a part of the inorganic filler (B), and all or a part of the silane coupling agent (C) are kneaded, then in the first stage or in the subsequent kneading stage, a basic compound (E) is added, an acidic compound (D) is added in the kneading stage after the first stage of kneading, and the highest temperature of the rubber composition in the final stage of kneading is from 60 to 120°C.

Here, the mercapto group-having compound is preferably at least one compound selected from a group consisting of compounds represented by the following general formulae (I) and (II):

[Chemical Formula 3]

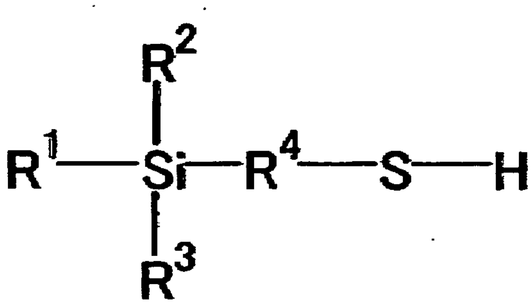

···(I)

In the formula, $R^1$, $R^2$ and $R^3$ each independently represents a group selected from $-O-C_jH_{2j+1}$, $-(O-C_kH_{2k}-)_a$ $-O-C_mH_{2m+1}$ and $-C_nH_{2n+1}$; j , m and n each independently indicates from 0 to 12; k and a each independently indicates

from 1 to 12; $R^4$ represents a group selected from linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group and aralkylene group, having from 1 to 12 carbon atoms.

Preferably, at least one of $R^1$, $R^2$ and $R^3$ is $-(O-C_kH_{2k}-)_a-O-C_mH_{2m+1}$.

[Chemical Formula 4]

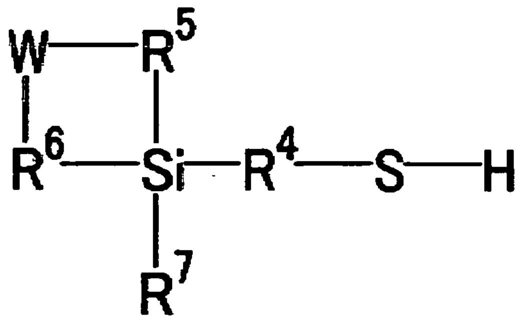

···(II)

In the formula, W represents a group selected from $-NR^8-$, $-O-$ and $-CR^9R^{10}-$ (where $R^8$ and $R^9$ each represent $-C_pH_{2p+1}$, $R^{10}$ represents $-C_qH_{2q+1}$, p and q each independently indicates from 0 to 20); $R^5$ and $R^6$ each independently represents $-M-C_rH_{2r}-$ (where M represents -O- or $-CH_2-$, and r indicates from 1 to 20); $R^7$ represents a group selected from $-O-C_jH_{2j+1}$, $-(O-C_kH_{2k}-)_a-O-C_mH_{2m+1}$ and $-C_nH_{2n+1}$ ; j , m and n each independently indicates from 0 to 12; k and a each independently indicates from 1 to 12; $R^4$ represents a group selected from linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group and aralkylene group, having from 1 to 12 carbon atoms.

In the present invention, after the rubber component (A), all or a part of the inorganic filler (B), and all or a part of the silane coupling agent (C) are kneaded in the first stage of kneading, and then in the first stage or in the subsequent kneading stage, a basic compound (E) is added; and this is in order to enhance the activity of the coupling function of the silane coupling agent (C). Specifically, after the reaction of the inorganic filler (B) and the silane coupling agent (C) has fully gone on, the reaction of the silane coupling agent (C) and the rubber component (A) can be go on.

The highest temperature of the rubber composition in the final stage of kneading is preferably from 80 to 120°C, and this is for securing good dispersion of the chemicals to be added in the final stage. From this viewpoint, the temperature is more preferably from 100 to 120°C.

In the present invention, the first stage of kneading is the initial stage of kneading the rubber component (A), all or a part of the inorganic filler (B), and all or a part of the silane coupling agent (C), but does not include a case of kneading the rubber component (A) and the other filler than the inorganic filler (B) in the initial stage and a case of pre-kneading the rubber component (A) alone.

It is desirable that the highest temperature of the rubber composition in the first stage of kneading is from 120 to 190°C for more successfully enhancing the activity of the coupling function of the silane coupling agent (C).

In the present invention, the acidic compound (D) is added in the kneading stage after the first stage of kneading for more successfully enhancing the activity of the coupling function of the silane coupling agent (C). For the same reason, it is desirable that the basic compound (E) is added in the kneading stage after the first stage of kneading, and more preferably, the acidic compound (D) and the basic compound (E) are added in the final stage of kneading.

For more successfully enhancing the activity of the coupling function of the silane coupling agent (C), it is also desirable to add the acidic compound (D) in the kneading stage after the kneading stage where the basic compound (E) is added.

In the present invention, the acidic compound (D) is used as a sulfur vulcanization activator, and for example, in the final stage of kneading, if desired, a suitable amount of the compound may be incorporated.

[Silane Coupling Agent (C)]

The silane coupling agent (C) for use in the rubber composition production method of the present invention is a compound having a mercapto group. The mercapto group-having compound is preferably at least one compound selected from a group consisting of compounds represented by the above-mentioned general formulae (I) and (II).

In the general formulae (I) and (II), specific examples of $R^1$, $R^2$, $R^3$ and $R^7$ include, for example, a methoxy group, an ethoxy group, a propoxy group, an isopropoxy group, a butoxy group, an isobutoxy group, a hydroxy group, a methyl group, an ethyl group, a propyl group, an isopropyl group, a butyl group, an isobutyl group, a hydrogen atom, etc. Above all, preferred are a methoxy group, an ethoxy group, a propoxy group, an isopropoxy group, a methyl group, an ethyl group, a propyl group, an isopropyl group, etc.

Specific examples of $R^4$ include, for example, a methylene group, an ethylene group, a propylene group, a butylene group, a pentylene group, a hexylene group, a heptylene group, an octylene group, a nonylene group, a decylene group, an undecylene group, a dodecylene group, etc.

Specific examples of $R^5$ and $R^6$ include, for example, a propylene group, an ethylene group, a hexylene group, a butylene group, a methylene group, etc.

Compounds represented by the general formula (I) include, for example, 3-mercaptopropyltrimethoxysilane, 3-mercaptopropyltriethoxysilane, 3-mercaptopropylmethyldimethoxysilane, (mercaptomethyl)dimethylethoxysilane, mercaptomethyltrimethoxysilane, etc.

Compounds represented by the general formula (II) include, for example, 3-mercaptopropyl(ethoxy)-1,3-dioxa-6-methylaza-2-silacyclooctane, 3-mercaptopropyl(ethoxy)-1,3-dioxa-6-butylaza-2-silacyclooctane, 3-mercaptopropyl(ethoxy)-1,3-dioxa-6-dodecylaza-2-silacyclooctane, etc.

Using the silane coupling agent (C) of the type, the rubber composition in the present invention can give pneumatic tires more excellent in low-heat-generation property having better abrasion resistance.

In the present invention, one alone or two or more different types of the silane coupling agents (C) can be used either singly or as combined.

Regarding the amount of the silane coupling agent (C) to be in the rubber composition in the present invention, preferably, the ratio by mass of {silane coupling agent (C)/inorganic filler (B)} is from (1/100) to (20/100). When the ratio is at least (1/100), then the effect of enhancing the low-heat-generation property of the rubber composition can be more successfully exhibited; and when at most (20/100), the cost of the rubber composition is low and the economic potential thereof increases. Further, the ratio by mass is more preferably from (3/100) to (20/100), even more preferably from (4/100) to (15/100).

[Acidic Compound (D)]

Not specifically defined, the acidic compound (D) for use in the present invention may be any acidic compound, but is preferably a mono- or poly-organic acid, or a partial ester of a poly-organic acid, or a metal salt of a mono- or poly-organic acid.

The mono-organic acid includes saturated fatty acids and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linolic acid, linolenic acid, nervonic acid, etc.; as well as resin acids such as rosin acids (abietic acid, neoabietic acid, dehydroabietic acid, paralustrinic acid, pimaric acid, isopimaric acid, etc.), modified rosin acids, etc.

The poly-organic acid includes unsaturated dicarboxylic acids or saturated dicarboxylic acids, as well as their partial esters (for example, monoesters) or acid anhydrides, etc.

The unsaturated dicarboxylic acid includes maleic acid, fumaric acid, citraconic acid, mesaconic acid, 2-pentene diacid, methylenesuccinic acid (itaconic acid), allylmalonic acid, isopropylidenesuccinic acid, 2,4-hexadiene diacid, acetylene-dicarboxylic acid, etc.; and the saturated dicarboxylic acid includes oxalic acid, malonic acid, succinic acid, glutaric acid, adipic acid, pimelic acid, suberic acid, azelaic acid, sebacic acid, tridecene diacid, methylsuccinic acid, 2,2-dimethylsuccinic acid, 2,3-dimethylsuccinic acid, tetramethylsuccinic acid, etc.

As the partial ester, preferably mentioned are (poly)esters of an unsaturated carboxylic acid and an oxycarboxylic acid; esters having a carboxyl group at both ends thereof, of a diol such as ethylene glycol, hexanediol, cyclohexanedimethanol or the like and an unsaturated dicarboxylic acid such as maleic acid, fumaric acid, itaconic acid or the like; etc.

The oxycarboxylic acid includes malic acid, tartaric acid, citric acid, etc.

The (poly)ester of an unsaturated carboxylic acid and an oxycarboxylic acid is preferably maleic acid monoesters, and more preferably monomalate of maleic acid.

The ester having a carboxyl group at both ends thereof, of a diol and an unsaturated dicarboxylic acid includes polyalkylene glycol/maleic acid polyester terminated with a carboxylic acid at both ends, such as polybutylene maleate having a carboxyl group at both ends thereof, poly(PEG200) maleate having a carboxyl group at both ends thereof, etc.; polybutylene adipate maleate having a carboxyl group at both ends thereof, etc.

In the present invention, the acidic compound (D) must fully exhibit the function thereof as a vulcanization activator, and therefore the acidic compound (D) is preferably stearic acid.

[Basic Compound (E)]

Not specifically defined, the basic compound (E) for use in the present invention may be any basic compound, but is preferably various amine-type antiaging agents. Concretely, mentioned are p-phenylenediamine-type antiaging agents such as N-phenyl-N'-(1,3-dimethylbutyl)-p-phenylenediamine, N-phenyl-N'-(1-methylheptyl)-p-phenylenediamine, N-phenyl-N'-isopropyl-p-phenylenediamine, N,N'-diphenyl-p-phenylenediamine, N,N'-di-2-naphthyl-p-phenylenediamine, N-phenyl-N'-(3-metharcyloyloxy-2-hydroxypropyl)-p-phenylenedimaine, etc.; diphenylamine-type antiaging agents such as di-tert-butyl-diphenylamine, 4,4'-dicumyl-diphenylamine, alkylated diphenylamines (octylated diphenylamine, etc.), N-phenyl-1-naphthylamine, 4,4'-($\alpha$,$\alpha$-dimethylbenzyl)-diphenylamine, etc. Above all, preferred is at least one compound selected from a group consisting of N-phenyl-N'-(1,3-dimethylbutyl)-p-phenylenediamine, N-phenyl-N'-(1-methylheptyl)-p-phenylenediamine, N-phenyl-N'-isopropyl-p-phenylenediamine, N,N'-diphenyl-p-phenylenediamine, N,N'-di-2-naphthyl-p-phenylenediamine and N-phenyl-N'-(3-methacryloyloxy-2-hydroxypropyl)-p-phenylenediamine; or that is, preferred is such a p-phenylenediamine-type antiaging agent.

In case where the basic compound (E) is added in the first stage of kneading in the present invention, it is desirable that the number of molecules (molar number) of the basic compound (E) in the rubber composition is from 0 to 0.6 times the number of molecules (molar number) of the silane coupling agent (C). When the molar number is at most 0.6 times, the reaction between the silane coupling agent (C) and silica can be successfully prevented from being retarded. More preferably, the number of molecules (molar number) of the basic compound (E) is from 0 to 0.4 times the number of molecules (molar number) of the silane coupling agent (C).

In the present invention, the basic compound (E) serves as an antiaging agent, and therefore, if desired, a suitable amount of the compound may be incorporated in the kneading stage after the first stage of kneading, for example, in the final stage of kneading.

[Rubber Component (A)]

As the synthetic dienic rubber of the rubber component (A) for use in the rubber composition production method of the present invention, usable here are styrene-butadiene copolymer rubber (SBR), polybutadiene rubber (BR), polyisoprene rubber (IR), butyl rubber (IIR), ethylene-propylene-diene tercopolymer rubber (EPDM), etc. One or more different types of natural rubbers and synthetic dienic rubbers may be used here either singly or as combined.

In the rubber composition production method of the present invention, it is desirable that a synthetic rubber produced according to a solution polymerization method (for example, solution-polymerized SBR, solution-polymerized BR, etc.) accounts for at least 70% by mass of the rubber component (A), more preferably at least 80% by mass, even more preferably at least 90% by mass. Especially preferably, the rubber component (A) is entirely a synthetic rubber produced according to a solution polymerization method. This is in order to reduce the influence of at least one compound selected from the acidic compound (D) and the basic compound (E) derived from the emulsifier contained in the synthetic rubber produced according to an emulsion polymerization method.

[Inorganic Filler (B)]

As the inorganic filler (B) for use in the rubber composition production method of the present invention, usable are silica and an inorganic compound represented by the following general formula (III):

$$dM^1\cdot xSiOy\cdot zH_2O \qquad (III)$$

In the general formula (III), $M^1$ represents at least one selected from a metal selected from aluminium, magnesium, titanium, calcium and zirconium, and oxides or hydroxides of those metals, their hydrates, or carbonates of the metals; d, x, y and z each indicates an integer of from 1 to 5, an integer of from 0 to 10, an integer of from 2 to 5, and an integer of from 0 to 10, respectively.

In the general formula (III), when x and z are both 0, then the inorganic compound is at least one metal selected from aluminium, magnesium, titanium, calcium and zirconium, or a metal oxide or metal hydroxide thereof.

In the present invention, silica is preferred as the inorganic filler (B) from the viewpoint of satisfying both low rolling property and abrasion resistance. As silica, any commercially-available one is usable here; and above all, preferred is wet silica, dry silica or colloidal silica, and more preferred is wet silica. Preferably, the BET specific surface area (as measured according to ISO 5794/1) of silica for use herein is from 40 to 350 $m^2/g$. Silica of which the BET specific surface area falls within the range is advantageous in that it satisfies both rubber-reinforcing capability and dispersibility in rubber component. From this viewpoint, silica of which the BET specific surface area falls within a range of from 80 to 350 $m^2/g$ is more preferred; silica of which the BET specific surface area falls within a range of more than 130 $m^2/g$ to 350 $m^2/g$ is even more preferred; and silica of which the BET specific surface area falls within a range of from 135 to

350 $m^2/g$ is even more preferred. As silicas of those types, usable here are commercial products of Tosoh Silica's trade names "Nipseal AQ" (BET specific surface area = 205 $m^2/g$) and "Nipseal KQ" (BET specific surface area = 240 $m^2/g$); Degussa's trade name "Ultrasil VN3" (BET specific surface area = 175 $m^2/g$), etc.

As the inorganic compound represented by the general formula (III), usable here are alumina ($Al_2O_3$) such as γ-alumina, α-alumina, etc.; alumina monohydrate ($Al_2O_3 \cdot H_2O$) such as boehmite, diaspore, etc.; aluminium hydroxide [$Al(OH)_3$] such as gypsite, bayerite, etc.; aluminium carbonate [$Al_2(CO_3)_2$], magnesium hydroxide [$Mg(OH)_2$], magnesium oxide ($MgO$), magnesium carbonate ($MgCO_3$), talc ($3MgO \cdot 4SiO_2 \cdot {}_{H2}O$), attapulgite ($5MgO \cdot 8SiO_2 \cdot 9H_2O$), titanium white ($TiO_2$), titanium black ($TiO_{2n-1}$), calcium oxide ($CaO$), calcium hydroxide [$Ca(OH)_2$], aluminium magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$) , bentonite ($Al_2O_3 \cdot 4SiO_2 \cdot 2H_2O$), aluminium silicate ($Al_2SiO_5$, $Al_4 \cdot 3SiO_4 \cdot 5H_2O$, etc. ), magnesium silicate ($Mg_2SiO_4$, $MgSiO_3$, etc.), calcium silicate ($Ca_2 \cdot SiO_4$, etc. ) , aluminium calcium silicate ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$] ; as well as crystalline aluminosilicate salts containing a charge-correcting hydrogen, alkali metal or alkaline earth metal such as various types of zeolite. Preferably, $M^3$ in the general formula (5) is at least one selected from aluminium metal, aluminium oxide or hydroxide, and their hydrates, or aluminium carbonate.

One or more different types of the inorganic compounds of the general formula (III) may be used here either singly or as combined. The mean particle size of the inorganic compound is preferably within a range of from 0.01 to 10 μm from the viewpoint of the balance of kneading workability, abrasion resistance and wet grip performance, and more preferably within a range of from 0.05 to 5 μm.

As the inorganic filler (B) in the present invention, silica alone may be used, or silica as combined with at least one inorganic compound of the general formula (III) may be used.

If desired, the filler in the rubber composition in the present invention may contain carbon black in addition to the above-mentioned inorganic filler (B). Containing carbon black, the filler enjoys the effect of lowering the electric resistance of the rubber composition to thereby prevent static electrification thereof. Carbon black for use herein is not specifically defined. For example, preferred is use of high, middle or low-structure SAF, ISAF, IISAF, N339, HAF, FEF, GPF, SRF-grade carbon black; and more preferred is use of SAF, ISAF, IISAF, N339, HAF, FEF-grade carbon black. Preferably, the nitrogen adsorption specific surface area ($N_2SA$, as measured according to JIS K 6217-2:2001) of such carbon black is from 30 to 250 $m^2/g$. One alone or two or more different types of such carbon black may be used here either singly or as combined. In the present invention, the inorganic filler (B) does not contain carbon black.

The inorganic filler (B) in the rubber composition in the present invention is preferably in an amount of from 20 to 120 parts by mass relative to 100 parts by mass of the rubber component (A). When the amount is at least 20 parts by mass, then it is favorable from the viewpoint of securing wet performance; and when at most 120 parts by mass, then it is favorable from the viewpoint of reducing rolling resistance. Further, the amount is more preferably from 30 to 100 parts by mass.

Also preferably, the filler in the rubber composition in the present invention is in an amount of from 20 to 150 parts by mass relative to 100 parts by mass of the rubber component (A). When the amount is at least 20 parts by mass, then it is favorable from the viewpoint of enhancing rubber composition reinforcing capability; and when at most 150 parts by mass, then it is favorable from the viewpoint of reducing rolling resistance.

In the filler, preferably, the amount of the inorganic filler (B) is at least 30% by mass from the viewpoint of satisfying both wet performance and reduced rolling resistance, more preferably at least 40% by mass, and even more preferably at least 70% by mass.

In case where silica is used as the inorganic filler (B), it is desirable that silica accounts for at least 30% by mass of the filler, more preferably at least 35% by mass.

In the rubber composition production method of the present invention, various additives that are generally incorporated in a rubber composition, for example, a vulcanization activator such as zinc flower or the like, an antiaging agent and others may be optionally added and kneaded in the first stage or the final stage of kneading, or in the intermediate stage between the first stage and the final stage.

As the kneading apparatus for the production method of the present invention, usable is any of a Banbury mixer, a roll, an intensive mixer, a kneader, a double-screw extruder, etc.

## Examples

The present invention is described in more detail with reference to the following Examples; however, the present invention is not limited at all by the following Examples.

The highest temperature of the rubber composition in kneading stage, the Mooney viscosity ($ML_{1+4}$) index and the low-heat-generation property (tanδ index) were evaluated according to the following methods.

Measurement Method for Highest Temperature of Rubber Composition in First Stage and Final Stage of Kneading

A thermometer was inserted into the center part of the rubber composition immediately after taken out of a Banbury mixer, and the temperature of the composition was measured. One sample was measured three times, and the arithmetic average thereof was referred to as the highest temperature.

Mooney Viscosity ($ML_{1+4}$) Index

The Mooney viscosity ($ML_{1+4}$/130°C) was measured at 130°C according to JIS K 6300-1:2001, and shown as index indication according to the following formula. The samples having a smaller index have a lower viscosity and therefore have better workability.

Mooney Viscosity ($ML_{1+4}$) Index = (Mooney viscosity of unvulcanized rubber composition tested)/(Mooney viscosity of unvulcanized rubber composition of Comparative Example 1, 19, 27, 35 or 43)

Low-Heat-Generation Property (tanδ index)

Using a viscoelasticity measuring device (by Rheometric), tanδ of the rubber composition sample was measured at a temperature of 60°C, at a dynamic strain of 5% and at a frequency of 15 Hz. Based on the reciprocal of tanδ in Comparative Example 1, 19, 27, 35 or 43, as referred to 100, the data were expressed as index indication according to the following formula. The samples having a larger index value have a better low-heat-generation property and have a smaller hysteresis loss.

Low-Heat-Generation Index = {(tanδ of vulcanized rubber composition of Comparative Example 1)/(tanδ of vulcanized rubber composition tested)} × 100

Production Example 1 - Production of Silane Coupling Agent-3

In a nitrogen atmosphere in a 500-mL four-neck eggplant flask, 23.8 g of 3-mercaptopropyltriethoxysilane, 11.9 g of N-methyldiethanolamine and 0.05 g of titanium tetra-n-butoxide were dissolved in 200 mL of xylene. This was heated up to 150°C and stirred for 6 hours. Subsequently, using a rotary evaporator, the solvent was evaporated away at 20 hPa/40°C, and then via a rotary pump (10 Pa) and a cold trap (dry ice + ethanol), the remaining volatiles were removed to give 24.0 g of 3-mercaptopropyl(ethoxy)-1,3-dioxa-6-methylaza-2-silacyclooctane.
$^1$H-NMR (CDC13, 700 MHz, δ; ppm) = 3.7(m;6H), 2.6(t;4H), 2.5(m;2H), 2.4(s;3H), 1.6(m;2H), 0.8(t;3H), 0.6(t;2H)

Production Example 2 - Production of Silane Coupling Agent-4

In a nitrogen atmosphere in a 500-mL four-neck eggplant flask, 23.8 g of 3-mercaptopropyltriethoxysilane, 16.1 g of N-butyldiethanolamine and 0.05 g of titanium tetra-n-butoxide were dissolved in 200 mL of xylene. This was heated up to 150°C and stirred for 6 hours. Subsequently, using a rotary evaporator, the solvent was evaporated away at 20 hPa/40°C, and then via a rotary pump (10 Pa) and a cold trap (dry ice + ethanol), the remaining volatiles were removed to give 28.7 g of 3-mercaptopropyl(ethoxy)-1,3-dioxa-6-butylaza-2-silacyclooctane.
$^1$H-NMR (CDC13, 700 MHz, δ; ppm) = 3.7(m;6H), 2.6(t;4H), 2.5(m;2H), 2.4(m;2H), 1.6(m;2H), 1.4(m;2H), 1.3(m;2H), 0.9(t;3H), 0.8(t;3H), 0.6(t;2H)

Production Example 3 - Production of Silane Coupling Agent-5

In a nitrogen atmosphere in a 500-mL four-neck eggplant flask, 23.8 g of 3-mercaptopropyltriethoxysilane, 27.3 g of N-lauryldiethanolamine and 0.05 g of titanium tetra-n-butoxide were dissolved in 200 mL of xylene. This was heated

up to 150°C and stirred for 6 hours. Subsequently, using a rotary evaporator, the solvent was evaporated away at 20 hPa/40°C, and then via a rotary pump (10 Pa) and a cold trap (dry ice + ethanol), the remaining volatiles were removed to give 40.0 g of 3-mercaptopropyl(ethoxy)-1,3-dioxa-6-dodecylaza-2-silacyclooctane.

$^1$H-NMR (CDC13, 700 MHz, δ; ppm) = 3.7(m;6H), 2.6(t;4H), 2.5(m;2H), 2.4(m;2H), 1.6(m;2H), 1.4(m;2H), 1.3(m;18H), 0.9(t;3H), 0.8(t;3H), 0.6(t;2H)

Examples 1 to 36, and Comparative Examples 1 to 18

According to the compositional formulation and the kneading method shown in Tables 1 to 4, the rubber component, silica, the silane coupling agent and others were added and kneaded in the first stage of kneading. In Examples 1 to 18 and 29 to 36 and Comparative Examples 1 to 12 and 15 to 18 shown in Tables 1, 2 and 4, the highest temperature of the rubber composition in the first stage of kneading was controlled at 150°C. In Examples 19 to 28 and Comparative Example 13 and 14 shown in Table 3, the highest temperature of the rubber composition in the first stage of kneading was controlled as in Table 3. In Comparative Examples 1 to 18, at least one compound selected from the acidic compound (D) and the basic compound (E) was added along simultaneously with the silane coupling agent in the first stage of kneading.

Next, the highest temperature of the rubber composition in the final stage of kneading was controlled as in Tables 1 to 4. In each stage of kneading, a Banbury mixer was used for the kneading. The obtained 54 rubber compositions were evaluated in point of the Mooney viscosity ($ML_{1+4}$) index and the low-heat-generation property (tanδ index) thereof according to the above-mentioned methods. The results are shown in Tables 1 to 4.

[Table 1]

Table 1

| Part by mass | | | Example | | | | | | | | | | Comparative Example | | | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | 1 | 2 | 3 | 4 | 5 | 6 | 7 | 8 |
| Formulation | First Stage of Kneading | Solution-Polymerized SBR-A *1 | 100 | 100 | 100 | 100 | 100 | 100 | 100 | 100 | 100 | 100 | 100 | 100 | 100 | 100 | 100 | 100 | 100 | 100 |
| | | Carbon Black N220 *2 | 10 | 10 | 10 | 10 | 10 | 10 | 10 | 10 | 10 | 10 | 10 | 10 | 10 | 10 | 10 | 10 | 10 | 10 |
| | | Silica *3 | 50 | 50 | 50 | 50 | 50 | 50 | 50 | 50 | 50 | 50 | 50 | 50 | 50 | 50 | 50 | 50 | 50 | 50 |
| | | Silane Coupling Agent-1 *4 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Aromatic Oil | 30 | 30 | 30 | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | 2.0 | 2.0 | 2.0 | 2.0 | 2.0 | 2.0 | 2.0 | 2.0 |
| | | Maleic Acid Monoester *6 | - | - | - | - | - | - | - | - | - | - | - | 2.0 | - | 2.0 | - | 2.0 | - | 2.0 |
| | | Antiaging Agent 6PPD *7 | - | - | - | - | - | - | - | - | 1.0 | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | - | - | - | - | - | - | - | - |
| | | Maleic Acid Monoester *6 | - | 2.0 | - | 2.0 | - | 2.0 | - | 2.0 | - | 2.0 | - | - | - | - | - | - | - | - |
| | | Antiaging Agent 6PPD *7 | 1.0 | 1.0 | 1.0 | 1.0 | 1.0 | 1.0 | 1.0 | 1.0 | - | - | - | - | - | - | - | - | - | - |
| | | Antiaging Agent TMDQ *8 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Zinc Flower | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in Final Stage of Kneading (°C) | | | 105 | 105 | 75 | 75 | 85 | 85 | 115 | 115 | 105 | 105 | 105 | 105 | 75 | 75 | 85 | 85 | 115 | 115 |
| Organic Acid | Type of Organic Acid | | *5 | *5 *6 | *5 | *5 *6 | *5 | *5 *6 | *5 | *5 *6 | *5 | *5 *6 | *5 | *5 *6 | *5 | *5 *6 | *5 | *5 *6 | *5 | *5 *6 |
| | Kneading Stage for Organic Acid Addition | | Final Stage | | | | | | | | | | First Stage | | | | | | | |
| Base | Type of Base | | *7 | *7 | *7 | *7 | *7 | *7 | *7 | *7 | *7 | *7 | *7 | *7 | *7 | *7 | *7 | *7 | *7 | *7 |
| | Kneading Stage for Base Addition | | Final Stage | | | | | | | | First Stage | | First Stage | | | | | | | |
| Unvulcanizate Physical Property: Mooney Viscosity ($ML_{1+4}$) Index | | | 91 | 87 | 93 | 87 | 91 | 87 | 91 | 87 | 95 | 90 | 100 | 94 | 101 | 94 | 101 | 94 | 99 | 92 |
| Vulcanizate Physical Property: Low-Heat-Generation Property (tanδ index) | | | 120 | 119 | 108 | 108 | 115 | 115 | 122 | 120 | 112 | 112 | 100 | 99 | 99 | 98 | 100 | 100 | 98 | 98 |

[Table 2]

Table 2

| Part by mass | | | Example | | | | | | | | | | Comparative Example | | | | |
|---|---|---|---|---|---|---|---|---|---|---|---|---|---|---|---|---|---|
| | | | 1 | 11 | 12 | 13 | 14 | 9 | 15 | 16 | 17 | 18 | 1 | 9 | 10 | 11 | 12 |
| Formulation | First Stage of Kneading | Solution-Polymerized SBR-A *1 | 100 | 100 | 100 | 100 | 100 | 100 | 100 | 100 | 100 | 100 | 100 | 100 | 100 | 100 | 100 |
| | | Carbon Black N220 *2 | 10 | 10 | 10 | 10 | 10 | 10 | 10 | 10 | 10 | 10 | 10 | 10 | 10 | 10 | 10 |
| | | Silica *3 | 50 | 50 | 50 | 50 | 50 | 50 | 50 | 50 | 50 | 50 | 50 | 50 | 50 | 50 | 50 |
| | | Silane Coupling Agent-1 *4 | 4.0 | - | - | - | - | 4.0 | - | - | - | - | 4.0 | - | - | - | - |
| | | Silane Coupling Agent-2 *12 | - | 4.0 | - | - | - | - | 4.0 | - | - | - | - | 4.0 | - | - | - |
| | | Silane Coupling Agent-3 *13 | - | - | 4.0 | - | - | - | - | 4.0 | - | - | - | - | 4.0 | - | - |
| | | Silane Coupling Agent-4 *14 | - | - | - | 4.0 | - | - | - | - | 4.0 | - | - | - | - | 4.0 | - |
| | | Silane Coupling Agent-5 *15 | - | - | - | - | 4.0 | - | - | - | - | 4.0 | - | - | - | - | 4.0 |
| | | Aromatic Oil | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | 2.0 | 2.0 | 2.0 | 2.0 | 2.0 |
| | | Antiaging Agent 6PPD *7 | - | - | - | - | - | 1.0 | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | - | - | - | - | - |
| | | Stearic Acid *5 | 1.0 | 1.0 | 1.0 | 1.0 | 1.0 | - | - | - | - | - | - | - | - | - | - |
| | | Stearic Acid *5 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Stearic Acid *5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Stearic Acid *5 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Stearic Acid *5 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Stearic Acid *5 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Stearic Acid *5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in Final Stage of Kneading (°C) | | | 105 | 105 | 105 | 105 | 105 | 105 | 105 | 105 | 105 | 105 | 105 | 105 | 105 | 105 | 105 |
| Organic Acid | | Type of Organic Acid | *5 | *5 | *5 | *5 | *5 | *5 | *5 | *5 | *5 | *5 | *5 | *5 | *5 | *5 | *5 |
| | | Kneading Stage for Organic Acid Addition | Final Stage | | | | | | | | | | First Stage | | | | |
| Base | | Type of Base | *7 | *7 | *7 | *7 | *7 | *7 | *7 | *7 | *7 | *7 | *7 | *7 | *7 | *7 | *7 |
| | | Kneading Stage for Base Addition | Final Stage | | | | | First Stage | | | | | First Stage | | | | |
| Unvulcanizate Physical Property: Mooney Viscosity (ML1+4) Index | | | 91 | 89 | 85 | 84 | 81 | 95 | 92 | 90 | 89 | 86 | 100 | 97 | 95 | 93 | 91 |
| Vulcanizate Physical Property: Low-Heat-Generation Property (tanδ index) | | | 120 | 126 | 125 | 128 | 132 | 112 | 116 | 114 | 115 | 117 | 100 | 107 | 104 | 107 | 110 |

[Table 3]

Table 3

| Part by mass | | | Example | | | | | | | | | | | | Comparative Example | | |
|---|---|---|---|---|---|---|---|---|---|---|---|---|---|---|---|---|---|
| | | | 1 | 19 | 20 | 21 | 22 | 23 | 9 | 24 | 25 | 26 | 27 | 28 | 1 | 13 | 14 |
| Formulation | First Stage of Kneading | Solution-Polymerized SBR-A *1 | 100 | 100 | 100 | 100 | 100 | 100 | 100 | 100 | 100 | 100 | 100 | 100 | 100 | 100 | 100 |
| | | Carbon Black N220 *2 | 10 | 10 | 10 | 10 | 10 | 10 | 10 | 10 | 10 | 10 | 10 | 10 | 10 | 10 | 10 |
| | | Silica *3 | 50 | 50 | 50 | 50 | 50 | 50 | 50 | 50 | 50 | 50 | 50 | 50 | 50 | 50 | 50 |
| | | Silane Coupling Agent-1 *4 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Aromatic Oil | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | - | - | 2.0 | 2.0 | 2.0 |
| | | Antiaging Agent 6PPD *7 | - | - | - | - | - | - | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | 2.0 | 2.0 | - | - | - |
| | | Antiaging Agent 6PPD *7 | 1.0 | 1.0 | 1.0 | 1.0 | 1.0 | 1.0 | - | - | - | - | - | - | - | - | - |
| | | Antiaging Agent TMDQ *8 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Zinc Flower | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in First Stage of Kneading (°C) | | | 150 | 170 | 190 | 110 | 120 | 140 | 150 | 170 | 190 | 110 | 120 | 140 | 150 | 160 | 170 |
| Highest Temperature of Rubber Composition in Final Stage of Kneading (°C) | | | 105 | 105 | 105 | 105 | 105 | 105 | 105 | 105 | 105 | 105 | 105 | 105 | 105 | 105 | 105 |
| Organic Acid | Type of Organic Acid | | *5 | *5 | *5 | *5 | *5 | *5 | *5 | *5 | *5 | *5 | *5 | *5 | *5 | *5 | *5 |
| | Kneading Stage for Organic Acid Addition | | Final Stage | | | | | | | | | | | | First Stage | | |
| Base | Type of Base | | *7 | *7 | *7 | *7 | *7 | *7 | *7 | *7 | *7 | *7 | *7 | *7 | *7 | *7 | *7 |
| | Kneading Stage for Base Addition | | Final Stage | | | | | | First Stage | | | | | | First Stage | | |
| Unvulcanizate Physical Property: Mooney Viscosity (ML1+4) Index | | | 91 | 91 | 96 | 100 | 96 | 93 | 95 | 99 | 103 | 103 | 99 | 96 | 100 | 103 | 105 |
| Vulcanizate Physical Property: Low-Heat-Generation Property (tanδ index) | | | 120 | 124 | 125 | 108 | 114 | 117 | 112 | 115 | 117 | 107 | 109 | 114 | 100 | 101 | 103 |

[Table 4]

Table 4

| Part by mass | | | Example | | | | | | | | | | Comparative Example | | | | |
|---|---|---|---|---|---|---|---|---|---|---|---|---|---|---|---|---|---|
| | | | 1 | 29 | 30 | 31 | 32 | 9 | 33 | 34 | 35 | 36 | 1 | 15 | 16 | 17 | 18 |
| Formulation | First Stage of Kneading | Solution-Polymerized SBR-A *1 | 100 | 75 | 50 | 60 | 90 | 100 | 75 | 50 | 60 | 90 | 100 | 75 | 50 | 60 | 90 |
| | | Emulsion-Polymerized SBR-B *16 | - | 25 | 50 | 40 | 10 | - | 25 | 50 | 40 | 10 | - | 25 | 50 | 40 | 10 |
| | | Carbon Black N220 *2 | 10 | 10 | 10 | 10 | 10 | 10 | 10 | 10 | 10 | 10 | 10 | 10 | 10 | 10 | 10 |
| | | Silica *3 | 50 | 50 | 50 | 50 | 50 | 50 | 50 | 50 | 50 | 50 | 50 | 50 | 50 | 50 | 50 |
| | | Silane Coupling Agent-1 *4 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Aromatic Oil | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | 2.0 | 2.0 | 2.0 | 2.0 | 2.0 |
| | | Antiaging Agent 6PPD *7 | - | - | - | - | - | 1.0 | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | - | - | - | - | - |
| | | Antiaging Agent 6PPD *7 | 1.0 | 1.0 | 1.0 | 1.0 | 1.0 | - | - | - | - | - | - | - | - | - | - |
| | | Antiaging Agent TMDQ *8 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Zinc Flower | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in Final Stage of Kneading (°C) | | | 105 | 105 | 105 | 105 | 105 | 105 | 105 | 105 | 105 | 105 | 105 | 105 | 105 | 105 | 105 |
| Organic Acid | Type of Organic Acid | | *5 | *5 | *5 | *5 | *5 | *5 | *5 | *5 | *5 | *5 | *5 | *5 | *5 | *5 | *5 |
| | Kneading Stage for Organic Acid Addition | | Final Stage | | | | | | | | | | First Stage | | | | |
| Base | Type of Base | | *7 | *7 | *7 | *7 | *7 | *7 | *7 | *7 | *7 | *7 | *7 | *7 | *7 | *7 | *7 |
| | Kneading Stage for Base Addition | | Final Stage | | | | | First Stage | | | | | First Stage | | | | |
| Unvulcanizate Physical Property: Mooney Viscosity (ML1+4) Index | | | 91 | 94 | 98 | 97 | 91 | 95 | 97 | 99 | 98 | 96 | 100 | 105 | 112 | 118 | 102 |
| Vulcanizate Physical Property: Low-Heat-Generation Property (tanδ index) | | | 120 | 116 | 110 | 113 | 118 | 112 | 110 | 106 | 106 | 112 | 100 | 100 | 101 | 102 | 100 |

[Notes]

In Tables 1 to 4, the acidic compound (D) is abbreviated as "organic acid" and the basic compound (E) is as "base".

*1: Asahi Kasei's solution-polymerized styrene-butadiene copolymer rubber (SBR), trade name "Toughden 2000"

*2: N220 (ISAF), Asahi Carbon's trade name "#80"

*3: Tosoh Silica's trade name "Nipseal AQ", BET specific surface area 205 $m^2/g$

*4: Silane coupling agent-1: 3-mercaptopropyltriethoxysilane, by Kanto Chemical

*5: Stearic acid

*6: Monomalate of maleic acid

*7: N-(1,3-dimehtylbutyl)-N'-phenyl-p-phenylenediamine, Ouchi Shinko Chemical's trade name "Noclac 6C"

*8: 2,2,4-Trimethyl-1,2-dihydroquinoline polymer, Ouchi Shinko Chemical's trade name "Noclac 224"

*9: 1,3-Diphenylguanidine, Sanshin Chemical's trade name "Sanceler D"

*10: Di-2-benzothiazolyl disulfide, Sanshin Chemical's trade name "Sanceler DM"

*11: N-tert-butyl-2-benzothiazolylsulfenamide, Sanshin Chemical's trade name "Sanceler NS"

*12: Silane coupling agent-2: $(RO)_3-Si-(CH_2)_3-SH$ [where R

is $C_{13}H_{27}(OC_2H_4)_n$ and $C_2H_5$, and the proportion of $C_2H_5$ is 33% or so; n is an average number of 5], Evonik's silane coupling agent, trade name "Si363" (registered trademark(

*13: Silane coupling agent-3 produced in Production Example 1: 3-mercaptopropyl(ethoxy)-1,3-dioxa-6-methylaza-2-silacyclooctane

*14: Silane coupling agent-4 produced in Production Example 2: 3-mercaptopropyl(ethoxy)-1,3-dioxa-6-butylaza-2-silacyclooctane

*15: Silane coupling agent-5 produced in Production Example 3: 3-mercaptopropyl(ethoxy)-1,3-dioxa-6-dodecylaza-2-silacyclooctane

*16: JSR's emulsion-polymerized styrene-butadiene copolymer rubber (SBR), trade name "#1500"

Examples 37 to 39

According to the compositional formulation and the kneading method shown in Table 5, the rubber component, silica, the silane coupling agent and others were added and kneaded in the first stage of kneading. The highest temperature of the rubber composition in the first stage of kneading was controlled at 150°C. Next, in the second stage of kneading, at least one compound selected from the acidic compound (D) and the basic compound (E) shown in Table 5 was added. Next, the highest temperature of the rubber composition in the final stage of kneading was controlled as in Table 5. In each stage of kneading, a Banbury mixer was used for the kneading. The obtained 3 rubber compositions were evaluated in point of the Mooney viscosity ($ML_{1+4}$) index and the low-heat-generation property (tanδ index) thereof according to the above-mentioned methods. The results are shown in Table 5. For comparison, the data of Examples 1 and 9 and Comparative Example 1 were again shown therein.

[Table 5]

Table 5

| Part by mass | | | Example | | | | | Comparative Example |
|---|---|---|---|---|---|---|---|---|
| | | | 1 | 9 | 37 | 38 | 39 | 1 |
| Formulation | First Stage of Kneading | Solution-Polymerized SBR-A *1 | 100 | 100 | 100 | 100 | 100 | 100 |
| | | Carbon Black N220 *2 | 10 | 10 | 10 | 10 | 10 | 10 |
| | | Silica *3 | 50 | 50 | 50 | 50 | 50 | 50 |
| | | Silane Coupling Agent-1 *4 | 4.0 | - | - | - | - | 4.0 |
| | | Aromatic Oil | 30 | 30 | 30 | 30 | 30 | 30 |
| | | Stearic Acid *5 | - | - | - | - | - | 2.0 |
| | | Antiaging Agent 6PPD *7 | - | 1.0 | - | 1.0 | - | 1.0 |
| | Second Stage of Kneading | Stearic Acid *5 | - | - | 2.0 | 2.0 | 2.0 | - |
| | | Antiaging Agent 6PPD *7 | - | - | 1.0 | - | - | - |
| | Final Stage of Kneading | Stearic Acid *5 | 2.0 | 2.0 | - | 2.0 | - | - |
| | | Antiaging Agent 6PPD *7 | 1.0 | - | - | 1.0 | 1.0 | - |
| | | Antiaging Agent TMDQ*8 | 1.0 | 1.0 | 1.0 | 1.0 | 1.0 | 1.0 |
| | | Zinc Flower | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 |
| | | Sulfur | 1.5 | 1.5 | 1.5 | 1.5 | 1.5 | 1.5 |
| Highest Temperature of Rubber Composition in Final Stage of Kneading (°C) | | | 105 | 105 | 105 | 105 | 105 | 105 |
| Organic Acid | | Type of Organic Acid | *5 | *5 | *5 | *5 | *5 | *5 |
| | | Kneading Stage for Organic Acid Addition | Final Stage | | Second Stage | | | First Stage |
| Base | | Type of Base | *7 | *7 | *7 | *7 | *7 | *7 |
| | | Kneading Stage for Base Addition | Final Stage | First Stage | Second Stage | First Stage | Final Stage | First Stage |

(continued)

| Part by mass | Example | | | | | Comparative Example |
|---|---|---|---|---|---|---|
| | 1 | 9 | 37 | 38 | 39 | 1 |
| Unvulcanizate Physical Property: Mooney Viscosity (ML1+4) Index | 91 | 95 | 90 | 94 | 90 | 100 |
| Vulcanizate Physical Property: Low-Heat-Genera6on Property (tanδ index) | 120 | 112 | 120 | 111 | 120 | 100 |

[Notes]
In Table 5, the acidic compound (D) is abbreviated as "organic acid" and the basic compound (E) is as "base". *1 to *11 are the same as in [Notes] for Tables 1 to 4.

Examples 40 to 79, and Comparative Examples 19 to 50

According to the compositional formulation and the kneading method shown in Tables 6 to 9, the rubber component, silica, the silane coupling agent and others were added and kneaded in the first stage of kneading. In Examples 40 to 79 and Comparative Examples 19 to 50 shown in Tables 6 to 9, the highest temperature of the rubber composition in the first stage of kneading was controlled at 150°C. In Comparative Examples 19 to 50, at least one compound selected from the acidic compound (D) and the basic compound (E) was added simultaneously with the silane coupling agent in the first stage of kneading.

Next, the highest temperature of the rubber composition in the final stage of kneading was controlled as in Tables 6 to 9. In each stage of kneading, a Banbury mixer was used for the kneading. The obtained 72 rubber compositions were evaluated in point of the Mooney viscosity ($ML_{1+4}$) index and the low-heat-generation property (tanδ index) thereof according to the above-mentioned methods. The results are shown in Tabled 6 to 9.

[Table 6]

Table 6

| Part by mass | | | Example | | | | | | | | | | Comparative Example | | | | | | | |
|---|---|---|---|---|---|---|---|---|---|---|---|---|---|---|---|---|---|---|---|---|
| | | | 40 | 41 | 42 | 43 | 44 | 45 | 46 | 47 | 48 | 49 | 19 | 20 | 21 | 22 | 23 | 24 | 25 | 26 |
| Formulation | First Stage of Kneading | Solution-Polymerized SBR-A *1 | 100 | 100 | 100 | 100 | 100 | 100 | 100 | 100 | 100 | 100 | 100 | 100 | 100 | 100 | 100 | 100 | 100 | 100 |
| | | Carbon Black N220 *2 | 10 | 10 | 10 | 10 | 10 | 10 | 10 | 10 | 10 | 10 | 10 | 10 | 10 | 10 | 10 | 10 | 10 | 10 |
| | | Silica *17 | 50 | 50 | 50 | 50 | 50 | 50 | 50 | 50 | 50 | 50 | 50 | 50 | 50 | 50 | 50 | 50 | 50 | 50 |
| | | Silane Coupling Agent-1 *4 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Aromatic Oil | 30 | 30 | 30 | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | 2.0 | 2.0 | 2.0 | 2.0 | 2.0 | 2.0 | 2.0 | 2.0 |
| | | Maleic Acid Monoester *6 | - | - | - | - | - | - | - | - | - | - | - | 2.0 | - | 2.0 | - | 2.0 | - | 2.0 |
| | | Antiaging Agent 6PPD *7 | - | - | - | - | - | - | - | - | 1.0 | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | - | - | - | - | - | - | - | - |
| | | Maleic Acid Monoester *6 | - | 2.0 | - | 2.0 | - | 2.0 | - | 2.0 | - | 2.0 | - | - | - | - | - | - | - | - |
| | | Antiaging Agent 6PPD *7 | 1.0 | 1.0 | 1.0 | 1.0 | 1.0 | 1.0 | 1.0 | 1.0 | - | - | - | - | - | - | - | - | - | - |
| | | Antiaging Agent TMDQ *8 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Zinc Flower | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in Final Stage of Kneading (°C) | | | 105 | 105 | 75 | 75 | 85 | 85 | 115 | 115 | 105 | 105 | 105 | 105 | 75 | 75 | 85 | 85 | 115 | 115 |
| Organic Acid | | Type of Organic Acid | *5 | *5 *6 | *5 | *5 *6 | *5 | *5 *6 | *5 | *5 *6 | *5 | *5 *6 | *5 | *5 *6 | *5 | *5 *6 | *5 | *5 *6 | *5 | *5 *6 |
| | | Kneading Stage for Organic Acid Addition | Final Stage | | | | | | | | | | First Stage | | | | | | | |
| Base | | Type of Base | *7 | *7 | *7 | *7 | *7 | *7 | *7 | *7 | *7 | *7 | *7 | *7 | *7 | *7 | *7 | *7 | *7 | *7 |
| | | Kneading Stage for Base Addition | Final Stage | | | | | | | | First Stage | | First Stage | | | | | | | |
| Unvulcanizate Physical Property: Mooney Viscosity (ML1+4) Index | | | 94 | 85 | 95 | 89 | 94 | 88 | 92 | 85 | 96 | 89 | 100 | 92 | 100 | 92 | 99 | 93 | 100 | 90 |
| Vulcanizate Physical Property: Low-Heat-Generation Property (tanδ index) | | | 124 | 122 | 108 | 108 | 116 | 117 | 127 | 123 | 113 | 113 | 100 | 101 | 100 | 100 | 100 | 99 | 99 | 98 |

[Table 7]

Table 7

| Part by mass | | | Example 50 | 51 | 52 | 53 | 54 | 55 | 56 | 57 | 58 | 59 | Comparative Example 27 | 28 | 29 | 30 | 31 | 32 | 33 | 34 |
|---|---|---|---|---|---|---|---|---|---|---|---|---|---|---|---|---|---|---|---|---|
| Formulation | First Stage of Kneading | Solution-Polymerized SBR-A *1 | 100 | 100 | 100 | 100 | 100 | 100 | 100 | 100 | 100 | 100 | 100 | 100 | 100 | 100 | 100 | 100 | 100 | 100 |
| | | Carbon Black N220 *2 | 10 | 10 | 10 | 10 | 10 | 10 | 10 | 10 | 10 | 10 | 10 | 10 | 10 | 10 | 10 | 10 | 10 | 10 |
| | | Silica *18 | 50 | 50 | 50 | 50 | 50 | 50 | 50 | 50 | 50 | 50 | 50 | 50 | 50 | 50 | 50 | 50 | 50 | 50 |
| | | Silane Coupling Agent-1 *4 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Aromatic Oil | 30 | 30 | 30 | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | 2.0 | 2.0 | 2.0 | 2.0 | 2.0 | 2.0 | 2.0 | 2.0 |
| | | Maleic Acid Monoester *6 | - | - | - | - | - | - | - | - | - | - | - | 2.0 | - | 2.0 | - | 2.0 | - | 2.0 |
| | | Antiaging Agent 6PPD *7 | - | - | - | - | - | - | - | - | 1.0 | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | - | - | - | - | - | - | - | - |
| | | Maleic Acid Monoester *6 | - | 2.0 | - | 2.0 | - | 2.0 | - | 2.0 | - | 2.0 | - | - | - | - | - | - | - | - |
| | | Antiaging Agent 6PPD *7 | 1.0 | 1.0 | 1.0 | 1.0 | 1.0 | 1.0 | 1.0 | 1.0 | - | - | - | - | - | - | - | - | - | - |
| | | Antiaging Agent TMDQ *8 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Zinc Flower | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in Final Stage of Kneading (°C) | | | 105 | 105 | 75 | 75 | 85 | 85 | 115 | 115 | 105 | 105 | 105 | 105 | 75 | 75 | 85 | 85 | 115 | 115 |
| Organic Acid | Type of Organic Acid | | *5 | *5 *6 | *5 | *5 *6 | *5 | *5 *6 | *5 | *5 *6 | *5 | *5 *6 | *5 | *5 *6 | *5 | *5 *6 | *5 | *5 *6 | *5 | *5 *6 |
| | Kneading Stage for Organic Acid Addition | | Final Stage | | | | | | | | | | First Stage | | | | | | | |
| Base | Type of Base | | *7 | *7 | *7 | *7 | *7 | *7 | *7 | *7 | *7 | *7 | *7 | *7 | *7 | *7 | *7 | *7 | *7 | *7 |
| | Kneading Stage for Base Addition | | Final Stage | | | | | | | | First Stage | | First Stage | | | | | | | |
| Unvulcanizate Physical Property: Mooney Viscosity (ML1+4) Index | | | 90 | 88 | 93 | 87 | 90 | 85 | 91 | 86 | 92 | 89 | 100 | 95 | 100 | 95 | 100 | 95 | 100 | 94 |
| Vulcanizate Physical Property: Low-Heat-Generation Property (tanδ index) | | | 113 | 115 | 106 | 107 | 109 | 109 | 115 | 116 | 109 | 109 | 100 | 100 | 99 | 100 | 100 | 100 | 99 | 99 |

[Table 8]

Table 8

| Part by mass | | | Example | | | | | | | | | | Comparative Example | | | | | | | |
|---|---|---|---|---|---|---|---|---|---|---|---|---|---|---|---|---|---|---|---|---|
| | | | 60 | 61 | 62 | 63 | 64 | 65 | 66 | 67 | 68 | 69 | 35 | 36 | 37 | 38 | 39 | 40 | 41 | 42 |
| Formulation | First Stage of Kneading | Solution-Polymerized SBR-A *1 | 100 | 100 | 100 | 100 | 100 | 100 | 100 | 100 | 100 | 100 | 100 | 100 | 100 | 100 | 100 | 100 | 100 | 100 |
| | | Carbon Black N220 *2 | 10 | 10 | 10 | 10 | 10 | 10 | 10 | 10 | 10 | 10 | 10 | 10 | 10 | 10 | 10 | 10 | 10 | 10 |
| | | Silica *19 | 50 | 50 | 50 | 50 | 50 | 50 | 50 | 50 | 50 | 50 | 50 | 50 | 50 | 50 | 50 | 50 | 50 | 50 |
| | | Silane Coupling Agent-1 *4 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Aromatic Oil | 30 | 30 | 30 | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | 2.0 | 2.0 | 2.0 | 2.0 | 2.0 | 2.0 | 2.0 | 2.0 |
| | | Maleic Acid Monoester *6 | - | - | - | - | - | - | - | - | - | - | - | 2.0 | - | 2.0 | - | 2.0 | - | 2.0 |
| | | Antiaging Agent 6PPD *7 | - | - | - | - | - | - | - | - | 1.0 | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | - | - | - | - | - | - | - | - |
| | | Maleic Acid Monoester *6 | - | 2.0 | - | 2.0 | - | 2.0 | - | 2.0 | - | 2.0 | - | - | - | - | - | - | - | - |
| | | Antiaging Agent 6PPD *7 | 1.0 | 1.0 | 1.0 | 1.0 | 1.0 | 1.0 | 1.0 | 1.0 | - | - | - | - | - | - | - | - | - | - |
| | | Antiaging Agent TMDQ *8 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Zinc Flower | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in Final Stage of Kneading (°C) | | | 105 | 105 | 75 | 75 | 85 | 85 | 115 | 115 | 105 | 105 | 105 | 105 | 75 | 75 | 85 | 85 | 115 | 115 |
| Organic Acid | Type of Organic Acid | | *5 | *5 *6 | *5 | *5 *6 | *5 | *5 *6 | *5 | *5 *6 | *5 | *5 *6 | *5 | *5 *6 | *5 | *5 *6 | *5 | *5 *6 | *5 | *5 *6 |
| | Kneading Stage for Organic Acid Addition | | Final Stage | | | | | | | | | | First Stage | | | | | | | |
| Base | Type of Base | | *7 | *7 | *7 | *7 | *7 | *7 | *7 | *7 | *7 | *7 | *7 | *7 | *7 | *7 | *7 | *7 | *7 | *7 |
| | Kneading Stage for Base Addition | | Final Stage | | | | | | | | First Stage | | First Stage | | | | | | | |
| Unvulcanizate Physical Property: Mooney Viscosity (ML1+4) Index | | | 90 | 86 | 95 | 88 | 91 | 86 | 91 | 85 | 93 | 88 | 100 | 94 | 101 | 97 | 101 | 95 | 101 | 94 |
| Vulcanizate Physical Property: Low-Heat-Generation Property (tanδ index) | | | 109 | 110 | 105 | 105 | 107 | 107 | 112 | 112 | 108 | 108 | 100 | 100 | 99 | 99 | 99 | 100 | 100 | 101 |

[Table 9]

Table 9

| Part by mass | | | Example | | | | | | | | | | Comparative Example | | | | | | | |
|---|---|---|---|---|---|---|---|---|---|---|---|---|---|---|---|---|---|---|---|---|
| | | | 70 | 71 | 72 | 73 | 74 | 75 | 76 | 77 | 78 | 79 | 43 | 44 | 45 | 46 | 47 | 48 | 49 | 50 |
| Formulation | First Stage of Kneading | Solution-Polymerized SBR-A *1 | 100 | 100 | 100 | 100 | 100 | 100 | 100 | 100 | 100 | 100 | 100 | 100 | 100 | 100 | 100 | 100 | 100 | 100 |
| | | Carbon Black N220 *2 | 10 | 10 | 10 | 10 | 10 | 10 | 10 | 10 | 10 | 10 | 10 | 10 | 10 | 10 | 10 | 10 | 10 | 10 |
| | | Silica *20 | 50 | 50 | 50 | 50 | 50 | 50 | 50 | 50 | 50 | 50 | 50 | 50 | 50 | 50 | 50 | 50 | 50 | 50 |
| | | Silane Coupling Agent-1 *4 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Aromatic Oil | 30 | 30 | 30 | 30 | 30 | 30 | 30 | 30 | 30 | 30 | 30 | 30 | 30 | 30 | 30 | 30 | 30 | 30 |
| | | Stearic Acid *5 | - | - | - | - | - | - | - | - | - | - | 2.0 | 2.0 | 2.0 | 2.0 | 2.0 | 2.0 | 2.0 | 2.0 |
| | | Maleic Acid Monoester *6 | - | - | - | - | - | - | - | - | - | - | - | 2.0 | - | 2.0 | - | 2.0 | - | 2.0 |
| | | Antiaging Agent 6PPD *7 | - | - | - | - | - | - | - | - | 1.0 | 1.0 | 1.0 | 1.0 | 1.0 | 1.0 | 1.0 | 1.0 | 1.0 | 1.0 |
| | Final Stage of Kneading | Stearic Acid *5 | 2.0 | 2.0 | 2.0 | 2.0 | 2.0 | 2.0 | 2.0 | 2.0 | 2.0 | 2.0 | - | - | - | - | - | - | - | - |
| | | Maleic Acid Monoester *6 | - | 2.0 | - | 2.0 | - | 2.0 | - | 2.0 | - | 2.0 | - | - | - | - | - | - | - | - |
| | | Antiaging Agent 6PPD *7 | 1.0 | 1.0 | 1.0 | 1.0 | 1.0 | 1.0 | 1.0 | 1.0 | - | - | - | - | - | - | - | - | - | - |
| | | Antiaging Agent TMDQ *8 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Zinc Flower | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter MBTS *10 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Vulcanization Promoter TBBS *11 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Highest Temperature of Rubber Composition in Final Stage of Kneading (°C) | | | 105 | 105 | 75 | 75 | 85 | 85 | 115 | 115 | 105 | 105 | 105 | 105 | 75 | 75 | 85 | 85 | 115 | 115 |
| Organic Acid | | Type of Organic Acid | *5 | *5<br>*6 | *5 | *5<br>*6 | *5 | *5<br>*6 | *5 | *5<br>*6 | *5 | *5<br>*6 | *5 | *5<br>*6 | *5 | *5<br>*6 | *5 | *5<br>*6 | *5 | *5<br>*6 |
| | | Kneading Stage for Organic Acid Addition | Final Stage | | | | | | | | | | First Stage | | | | | | | |
| Base | | Type of Base | *7 | *7 | *7 | *7 | *7 | *7 | *7 | *7 | *7 | *7 | *7 | *7 | *7 | *7 | *7 | *7 | *7 | *7 |
| | | Kneading Stage for Base Addition | Final Stage | | | | | | | | First Stage | | First Stage | | | | | | | |
| Unvulcanizate Physical Property: Mooney Viscosity (ML1+4) Index | | | 90 | 88 | 95 | 90 | 92 | 89 | 89 | 85 | 93 | 89 | 100 | 95 | 102 | 98 | 100 | 96 | 99 | 95 |
| Vulcanizate Physical Property: Low-Heat-Generation Property (tanδ index) | | | 106 | 106 | 103 | 103 | 105 | 104 | 106 | 106 | 104 | 105 | 100 | 101 | 99 | 99 | 100 | 100 | 100 | 102 |

[Notes for Tables 6 to 9]
In Tables 6 to 9, the acidic compound (D) is abbreviated as "organic acid" and the basic compound (E) is as "base".

*1 to *11 are the same as in [Notes] for Tables 1 to 4.
*17: Tosoh Silica's trade name "Nipseal KQ", BET specific surface area 240 $m^2/g$
*18: Tosoh Silica's trade name "Nipseal NS", BET specific surface area 160 $m^2/g$
*19: Tosoh Silica's trade name "Nipseal NA", BET specific surface area 135 $m^2/g$
*20: Tosoh Silica's trade name "Nipseal ER", BET specific surface area 95 $m^2/g$

As obvious from Tables 1 to 9, the rubber compositions of Examples 1 to 79 are all better than the comparative rubber compositions of Comparative Examples 1 to 50 in point of the workability of the unvulcanized rubber composition and the low-heat-generation property (tanδ index).

Industrial Applicability

According to the production method for a rubber composition of the present invention, it is possible to obtain a rubber composition excellent in low-heat-generation property with further enhancing the coupling function activity thereof without lowering the workability of the unvulcanized rubber composition, and is therefore favorably used as a production method for constitutive members of various types of pneumatic tires for passenger cars, small-size trucks, minivans, pickup trucks and big-size vehicles (trucks, buses, construction vehicles, etc.) and others, especially for tread members of pneumatic radial tires.

## Claims

1. A method for producing a rubber composition containing a rubber component (A) of at least one selected from natural rubbers and synthetic dienic rubbers, a filler containing an inorganic filler (B), and a silane coupling agent (C) of a compound having a mercapto group, wherein the rubber composition is kneaded in multiple stages, in the first stage of kneading, the rubber component (A), all or a part of the inorganic filler (B), and all or a part of the silane coupling agent (C) are kneaded, then in the first stage or in the subsequent kneading stage, a basic compound (E) is added, an acidic compound (D) is added in the kneading stage after the first stage of kneading, and the highest temperature of the rubber composition in the final stage of kneading is from 60 to 120°C.

2. The method for producing a rubber composition according to claim 1, wherein the mercapto group-having compound is at least one compound selected from a group consisting of compounds represented by the following general formulae (I) and (II):

[Chemical Formula 1]

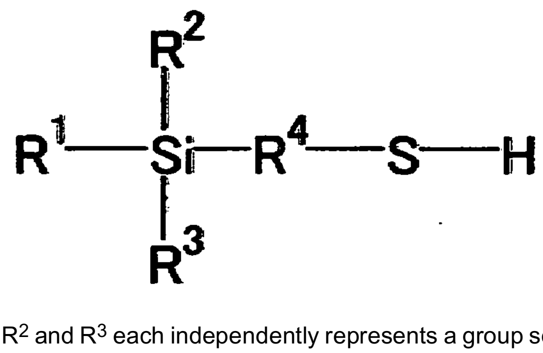

... (I)

[wherein $R^1$, $R^2$ and $R^3$ each independently represents a group selected from - $O-C_jH_{2j+1}$, $-(O-C_kH_{2k}-)_a-O-C_mH_{2m+1}$ and $-C_nH_{2n+1}$; j, m and n each independently indicates from 0 to 12; k and a each independently indicates from 1 to 12; $R^4$ represents a group selected from linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group and aralkylene group, having from 1 to 12 carbon atoms];

[Chemical Formula 2]

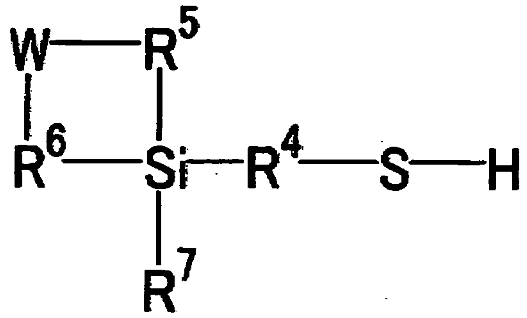

$\cdots$ (II)

[wherein W represents a group selected from $-NR^8-$, -O- and $-CR^9R^{10}-$(where $R^8$ and $R^9$ each represents $-C_pH_{2p+1}$, $R^{10}$ represents $-C_qH_{2q+1}$, p and q each independently indicates from 0 to 20); $R^5$ and $R^6$ each independently represents $-M-C_rH_{2r}-$ (where M represents -O- or $-CH_2-$, and r indicates from 1 to 20); $R^7$ represents a group selected from $-O-C_jH_{2j+1}$, $-(O-C_kH_{2k}-)_a-O-C_mH_{2m+1}$ and $-C_nH_{2n+1}$; j, m and n each independently indicates from 0 to 12; k and a each independently indicates from 1 to 12; $R^4$ represents a group selected from linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group and aralkylene group, having from 1 to 12 carbon atoms].

3. The method for producing a rubber composition according to any of claims 1 to 2, wherein the basic compound (E) is added in the kneading stage after the first stage of kneading.

4. The method for producing a rubber composition according to any of claims 1 to 3, wherein the acidic compound (D) and the basic compound (E) are added in the final stage of kneading.

5. The method for producing a rubber composition according to any of claims 1 to 3, wherein the acidic compound (D) is added in the kneading stage after the kneading stage in which the basic compound (E) has been added.

6. The method for producing a rubber composition according to any of claims 1 to 5, wherein the highest temperature of the rubber composition in the final stage of kneading is from 100 to 120°C.

7. The method for producing a rubber composition according to any of claims 1 to 6, wherein the acidic compound (D) is stearic acid.

8. The method for producing a rubber composition according to any of claims 1 to 7, wherein the basic compound (E) is at least one compound selected from a group consisting of N-phenyl-N'-(1,3-dimethylbutyl)-p-phenylenediamine, N-phenyl-N'-(1-methylheptyl)-p-phenylenediamine, N-phenyl-N'-isopropyl-p-phenylenediamine, N,N'-diphenyl-p-phenylenediamine, N,N'-di-2-naphthyl-p-phenylenediamine and N-phenyl-N'-(3-methacryloyloxy-2-hydroxypropyl)-p-phenylenediamine.

9. The method for producing a rubber composition according to any of claims 1 to 8, wherein the highest temperature of the rubber composition in the first stage of kneading is from 120 to 190°C.

10. The method for producing a rubber composition according to any of claims 1 to 9, wherein a synthetic rubber produced according to a solution polymerization method accounts for at least 70% by mass of the rubber component (A).

11. The method for producing a rubber composition according to any of claims 1 to 10, wherein the inorganic filler (B) is silica.

12. The method for producing a rubber composition according to any of claims 1 to 11, wherein the inorganic filler (B) accounts for at least 30% by mass of the filler.

13. A rubber composition produced according to the rubber composition production method of any of claims 1 to 12.

**14.** A tire using the rubber composition of claim 13.

**Patentansprüche**

**1.** Verfahren zur Herstellung einer Kautschukzusammensetzung, enthaltend eine Kautschukkomponente (A) von wenigstens einem ausgewählt aus Naturkautschuken und synthetischen Dienkautschuken, einen Füllstoff enthaltend einen anorganischen Füllstoff (B), und ein Silankupplungsmittel (C) von einer Verbindung mit einer Mercapto-Gruppe, wobei die Kautschukzusammensetzung in mehreren Stufen geknetet wird, wobei in der ersten Stufe des Knetens die Kautschukkomponente (A), der gesamte oder ein Teil des anorganischen Füllstoffs (B) und das gesamte oder ein Teil des Silankupplungsmittels (C) geknetet werden, dann in der ersten Stufe oder in der nachfolgenden Knetstufe eine basische Verbindung (E) zugegeben wird, eine saure Verbindung (D) in der Knetstufe nach der ersten Stufe des Knetens zugegeben wird, und die höchste Temperatur der Kautschukzusammensetzung in der letzten Stufe des Knetens von 6o bis 120°C ist.

**2.** Verfahren zur Herstellung einer Kautschukzusammensetzung gemäß Anspruch 1, wobei die Verbindung mit einer Mercapto-Gruppe wenigstens eine Verbindung ist ausgewählt aus einer Gruppe bestehend aus Verbindungen, dargestellt durch die folgenden allgemeinen Formen (I) und (II):

[Chemische Formel 1]

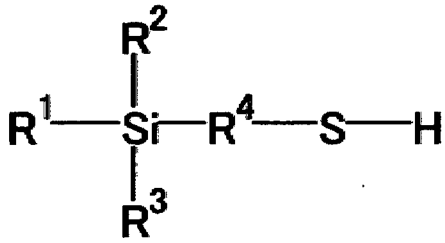

···(I)

[wobei $R^1$, $R^2$ und $R^3$ jeweils unabhängig eine Gruppe darstellen ausgewählt aus - $O\text{-}C_jH_{2j+1}$, $-(O\text{-}C_kH_{2k}\text{-})_a\text{-}O\text{-}C_mH_{2m+1}$ und $-C_nH_{2n+1}$; j, m und n jeweils unabhängig o bis 12 anzeigen; k und a jeweils unabhängig 1 bis 12 anzeigen; $R^4$ eine Gruppe darstellt, ausgewählt aus einer linearen, verzweigten oder cyclischen, gesättigten oder ungesättigten Alkylengruppe, Cycloalkylengruppe, Cycloalkylalkylengruppe, Cycloalkenylalkylengruppe, Alkenylengruppe, Cycloalkenylengruppe; Cycloalkylalkenylengruppe, Cycloalkenylenalkenylengruppe, Arylengruppe und Aralkylengruppe, mit 1 bis 12 Kohlenstoffatomen];

[Chemische Formel 2]

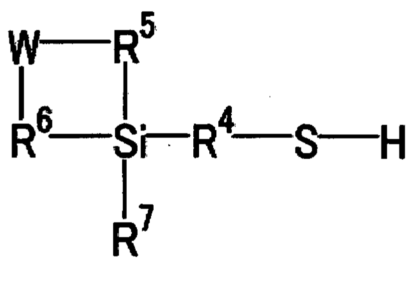

···(II)

[wobei W eine Gruppe darstellt, ausgewählt aus $-NR^8-$, -O- und $-CR^9R^{10}-$ (wobei $R^8$ und R9 jeweils $-CpH_{2p+1}$ darstellen, $R^{10}$ $-C_qH_{2q+1}$ darstellt, p und q jeweils unabhängig o bis 20 anzeigen); $R^5$ und $R^6$ jeweils unabhängig $-M\text{-}C_rH_{2r}\text{-}$ darstellen (wobei M -O- oder $-CH_2-$ darstellt, und r 1 bis 20 anzeigt); $R^7$ eine Gruppe darstellt, ausgewählt aus $-O\text{-}C_jH_{2j+1}$, $-(O\text{-}C_kH_{2k}\text{-})_a\text{-}O\text{-}C_mH_{2m+1}$ und $-C_nH_{2n+1}$ ; j, m und n jeweils unabhängig o bis 12 anzeigen; k und a jeweils unabhängig 1 bis 12 anzeigen; $R^4$ eine Gruppe darstellt, ausgewählt aus einer linearen, verzweigten oder

cyclischen, gesättigten oder ungesättigten Alkylengruppe, Cycloalkylengruppe, Cycloalkylalkylengruppe, Cycloalkenylalkylengruppe, Alkenylengruppe, Cycloalkenylengruppe; Cycloalkylalkenylengruppe, Cycloalkenylenalkenylengruppe, Arylengruppe und Aralkylengruppe, mit 1 bis 12 Kohlenstoffatomen].

**3.** Verfahren zur Herstellung einer Kautschukzusammensetzung gemäß irgendeinem der Ansprüche 1 bis 2, wobei die basische Verbindung (E) in der Knetstufe nach der ersten Stufe des Knetens zugegeben wird.

**4.** Verfahren zur Herstellung einer Kautschukzusammensetzung gemäß irgendeinem der Ansprüche 1 bis 3, wobei die saure Verbindung (D) und die basische Verbindung (E) in der letzten Stufe des Knetens zugegeben werden.

**5.** Verfahren zur Herstellung einer Kautschukzusammensetzung gemäß irgendeinem der Ansprüche 1 bis 3, wobei die saure Verbindung (D) in der Knetstufe nach der Knetstufe, in welcher die basische Verbindung (E) zugegeben wurde, zugegeben wird.

**6.** Verfahren zur Herstellung einer Kautschukzusammensetzung gemäß irgendeinem der Ansprüche 1 bis 5, wobei die höchste Temperatur der Kautschukzusammensetzung in der letzten Stufe des Knetens von 100 bis 120°C ist.

**7.** Verfahren zur Herstellung einer Kautschukzusammensetzung gemäß irgendeinem der Ansprüche 1 bis 6, wobei die saure Verbindung (D) Stearinsäure ist.

**8.** Verfahren zur Herstellung einer Kautschukzusammensetzung gemäß irgendeinem der Ansprüche 1 bis 7, wobei die basische Verbindung (E) wenigstens eine Verbindung ist, ausgewählt aus einer Gruppe bestehend aus N-Phenyl-N'-(1,3-dimethylbutyl)-p-phenylendiamin, N-Phenyl-N'-(1-methylheptyl)-p-phenylendiamin, N-Phenyl-N'-isopropyl-p-phenylendiamin, N,N'-Diphenyl-p-phenylendiamin, N,N'-Di-2-naphthyl-p-phenylendiamin und N-Phenyl-N'-(3-methacryloyloxy-2-hydroxypropyl)-p-phenylendiamin.

**9.** Verfahren zur Herstellung einer Kautschukzusammensetzung gemäß irgendeinem der Ansprüche 1 bis 8, wobei die höchste Temperatur der Kautschukzusammensetzung in der ersten Stufe des Knetens von 120 bis 190°C ist.

**10.** Verfahren zur Herstellung einer Kautschukzusammensetzung gemäß irgendeinem der Ansprüche 1 bis 9, wobei ein synthetischer Kautschuk, hergestellt gemäß einem Lösungspolymerisationsverfahren, wenigstens 70 Massen-% der Kautschukkomponente (A) ausmacht.

**11.** Verfahren zur Herstellung einer Kautschukzusammensetzung gemäß irgendeinem der Ansprüche 1 bis 10, wobei der anorganische Füllstoff (B) Siliciumdioxid bzw. Silica ist.

**12.** Verfahren zur Herstellung einer Kautschukzusammensetzung gemäß irgendeinem der Ansprüche 1 bis 11, wobei der anorganische Füllstoff (B) wenigstens 30 Massen-% des Füllstoffs ausmacht.

**13.** Kautschukzusammensetzung, hergestellt gemäß dem Verfahren zur Herstellung einer Kautschukzusammensetzung nach irgendeinem der Ansprüche 1 bis 12.

**14.** Reifen, bei dem die Kautschukzusammensetzung nach Anspruch 13 verwendet wird.

## Revendications

**1.** Procédé de production d'une composition de caoutchouc contenant un composant caoutchouc (A) d'au moins un choisi parmi les caoutchoucs naturels et les caoutchoucs diéniques synthétiques, une charge contenant une charge inorganique (B) et un agent de couplage de type silane (C) d'un composé ayant un groupe mercapto, dans lequel la composition de caoutchouc est malaxée dans plusieurs étages, le composant caoutchouc (A), la totalité ou une partie de la charge inorganique (B), et la totalité ou une partie de l'agent de couplage de type silane (C) sont malaxés dans le premier étage de malaxage, puis, dans le premier étage ou dans l'étage de malaxage suivant, un composé basique (E) est ajouté, un composé acide (D) est ajouté dans l'étage de malaxage après le premier étage de malaxage, et la température la plus élevée de la composition de caoutchouc dans l'étage final de malaxage est de 60 à 120°C.

**2.** Procédé de production d'une composition de caoutchouc selon la revendication 1, dans lequel le composé ayant

un groupe mercapto est au moins un composé choisi dans un groupe consistant en les composés représentés par les formules générales (I) et (II) ci-après :

[Formule chimique 1]

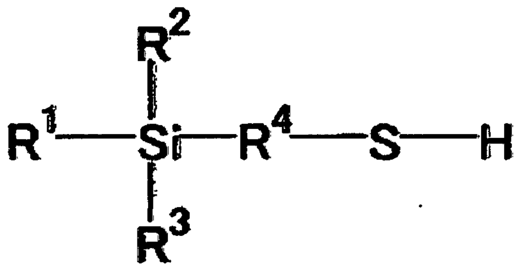

···(I)

[dans laquelle $R^1$, $R^2$ et $R^3$ représentent chacun indépendamment des autres un groupe choisi parmi $-O-C_jH_{2j+1}$, $-(o-C_kH_{2k}-)_a-o-C_mH_{2m+1}$ et $-C_nH_{2n+1}$ ; j, m et n représentent chacun indépendamment des autres une valeur de 0 à 12 ; k et a représentent chacun indépendamment de l'autre une valeur de 1 à 12 ; $R^4$ représente un groupe choisi parmi les groupes alkylène, les groupes cycloalkylène, les groupes cycloalkylalkylène, les groupes cycloalcénylalkylène, les groupes alcénylène, les groupes cycloalcénylène, les groupes cycloalkylalcénylène, les groupes cycloalcénylalcénylène, les groupes arylène et les groupes aralkylène, chacun étant saturé ou insaturé, à chaîne droite ou ramifiée, ou cyclique, ayant 1 à 12 atomes de carbone] ;

[Formule chimique 2]

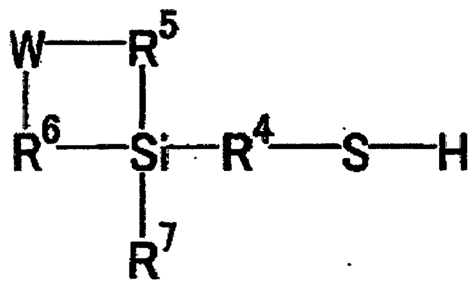

···(II)

[dans laquelle W représente un groupe choisi parmi $-NR^8-$, -O-, et $-CR_9R_{10}-$ (où $R^8$ et $R^9$ représentent chacun $-C_pH_{2p+1}$, $R^{10}$ représente $-C_qH_{2q+1}$, p et q représentent chacun indépendamment de l'autre une valeur de 0 à 20) ; $R^5$ et $R^6$ représentent chacun indépendamment de l'autre $-M-C_rH_{2r}-$ (où M représente -O- ou $-CH_2-$, et r représente une valeur de 1 à 20) ; $R^7$ représente un groupe choisi parmi $-O-C_jH_{2j+1}$, $-(O-C_kH_{2k}-)_a-O-C_mH_{2m+1}$ et $-C_mH_{2n+1}$ ; j, m et n représentent chacun indépendamment des autres une valeur de 0 à 12 ; k et a représentent chacun indépendamment de l'autre une valeur de 1 à 12 ; $R^4$ représente un groupe choisi parmi les groupes alkylène, les groupes cycloalkylène, les groupes cycloalkylalkylène, les groupes cycloalcénylalkylène, les groupes alcénylène, les groupes cycloalcénylène, les groupes cycloalkylalcénylène, les groupes cycloalcénylalcénylène, les groupes arylène et les groupes aralkylène, chacun étant saturé ou insaturé, à chaîne droite ou ramifiée, ou cyclique, ayant de 1 à 12 atomes de carbone].

3. Procédé de production d'une composition de caoutchouc selon l'une quelconque des revendications 1 à 2, dans lequel le composé basique (E) est ajouté dans l'étage de malaxage après le premier étage de malaxage.

4. Procédé de production d'une composition de caoutchouc selon l'une quelconque des revendications 1 à 3, dans lequel le composé acide (D) ou le composé basique (E) sont ajoutés dans l'étage final du malaxage.

5. Procédé de production d'une composition de caoutchouc selon l'une quelconque des revendications 1 à 3, dans lequel le composé acide (D) est ajouté dans l'étage de malaxage après l'étage de malaxage dans lequel le composé basique a été ajouté.

6. Procédé de production d'une composition de caoutchouc selon l'une quelconque des revendications 1 à 5, dans lequel la température la plus élevée de la composition de caoutchouc dans l'étage final de malaxage est de 100 à 120°C.

7. Procédé de production d'une composition de caoutchouc selon l'une quelconque des revendications 1 à 6, dans lequel le composé acide (D) est l'acide stéarique.

8. Procédé de production d'une composition de caoutchouc selon l'une quelconque des revendications 1 à 7, dans lequel le composé basique (E) est au moins un composé choisi dans le groupe consistant en la N-phényl-N'-(1,3-diméthylbutyl)-p-phénylènediamine, la N-phényl-N'-(1-méthylheptyl)-p-phénylènediamine, la N-phényl-N'-isopropyl-p-phénylènediamine, la N,N'-diphényl-p-phénylènediamine, la N,N'-di-2-naphtyl-p-phénylènediamine et la N-phényl-N'-(3-méthacryoloxy-2-hydroxypropyl)-p-phénylènediamine.

9. Procédé de production d'une composition de caoutchouc selon l'une quelconque des revendications 1 à 8, dans lequel la température la plus élevée de la composition de caoutchouc dans le premier étage de malaxage est de 120 à 190°C.

10. Procédé de production d'une composition de caoutchouc selon l'une quelconque des revendications 1 à 9, dans lequel un caoutchouc synthétique produit par un procédé de polymérisation en solution représente au moins 70 % en masse du composant de caoutchouc (A).

11. Procédé de production d'une composition de caoutchouc selon l'une quelconque des revendications 1 à 10, dans lequel la charge inorganique (B) est la silice.

12. Procédé de production d'une composition de caoutchouc selon l'une quelconque des revendications 1 à 11, dans lequel la charge inorganique (B) représente au moins 30 % en masse de la charge.

13. Composition de caoutchouc produite par le procédé de production d'une composition de caoutchouc selon l'une quelconque des revendications 1 à 12.

14. Pneumatique utilisant la composition de caoutchouc de la revendication 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7165991 A
- WO 199735918 A
- JP 2009126907 A
- WO 2009104766 A
- WO 2008123306 A